# EUROPEAN PATENT SPECIFICATION

(11) **EP 1 987 469 B1**
(45) Date of publication and mention of the grant of the patent: **21.07.2010**
(21) Application number: 07705810.5
(22) Date of filing: 07.02.2007
(51) Int. Cl.: G06K 7/00

(54) **WIRELESS COMMUNICATION SYSTEM**
DRAHTLOSES KOMMUNIKATIONSSYSTEM
SYSTEME DE COMMUNICATION SANS FIL

(30) Priority: 20.02.2006 ZA 200601476
(43) Date of publication of application: 05.11.2008
(73) Proprietor: Ipico Innovation Inc., Aurora, Ontario (CA)
(72) Inventor: VAN EEDEN, Hendrik, Lodewyk, 0181 Pretoria (ZA)
(74) Representative: Cohausz & Florack
(86) International application number: PCT/IB2007/050401
(87) International publication number: WO 2007/096797

(56) References cited:
- WO-A-02/41650
- WO-A-2004/063971

## Description

THIS INVENTION relates to a wireless communication system, and in particular it relates to RFID (Radio Frequency Identification) tags.

The Inventor is aware of RF (Radio Frequency) communication systems which include at least one reader, otherwise known as an interrogator, and a plurality of RFID tags, otherwise known as transponders. The RFID tags are typically passive, being energised by a broadcast signal from the reader, but can also be active, having an internal power source like a battery. The RFID tags typically communicate with the reader by reflecting a varying amount of energy back to the reader.

The communication between readers and RFID tags is regulated by various protocols. There are various different UHF air protocols in use in the world today, for example iP-X, ISO-18000-6A and B, and EPC C1 G2 and its Class 1 and Class 0 predecessors. Of these, EPC C1 G2 is the most well-known and most widely used, especially in the USA. While tags always execute just one of the available protocols, reader manufacturers produce multi-protocol readers that can handle more than one kind of tag.

The EPC C1G2 protocol is a "Reader Talks First" (RTF) protocol, i.e. tags do not respond until commanded to do so by the reader using some form of wake up command. In the case of EPC C1G2, the SELECT or QUERY commands are used for this purpose. In order to identify moving tags, the reader can poll for tags by repeatedly issuing 'wake-up' commands, or the reader can trigger the tags by some other means, for example manually, by infra-red beams, or by trip switches. Once communication has been initiated by the reader, a tag population is singled using a complex set of commands and replies between reader and tags.

The iP-X protocol, on the other hand, is a "Tag Talks First" (TTF) or "Tag Talks Only" (TTO) protocol, i.e. tags announce themselves when they enter a reader beam by transmitting an ID to the reader. This ID transmission typically takes place repeatedly at pseudo-random intervals using a low duty cycle. The transmission of the ID can be followed by transmission of additional data. No additional means to trigger the reader is required.

Although the EPC protocol is widely touted for supply chain and logistics applications, its main drawback is that complex reader to tag interaction requires a wide spectrum band in order to achieve high read rates. In addition, readers cannot share a communication channel with other readers in close proximity. While a wide enough spectrum allocation exists currently in the USA, this is not the case in all countries, notably Europe and China. EPC C1 G2 has therefore not found wide application in Europe, China and other countries with limited spectrum allocations. Due to its RTF nature, the EPC C1 G2 protocol is also not suitable for applications involving fast moving tags, or applications where tags can enter and leave a reader beam at indeterminate times.

The iP-X protocol requires very little bandwidth. In the case of the TTO version of the protocol, readers never modulate, or transmit commands, thus requiring very little spectrum. Readers can share the same communication channel, allowing for the operation of large numbers of readers in close proximity. The TTF nature of the protocol also makes it suitable for the detection of fast moving tags or applications where tags can enter and leave a reader beam at indeterminate times.

Due to the above-mentioned distinct advantages of the iP-X protocol over RTF protocols, it is likely to find acceptance over EPC C1G2 in regions such as Europe and China.

WO 2004/063971 describes a prior art electronic tag which includes a RTF protocol engine and a TTO or TTF protocol engine, a switch and a protocol detector.

According to the invention, there is provided an electronic tag according to claim 1 and a method of operating an electronic tag according to claim 5.

The invention will now be further described, by way of example, with reference to the accompanying diagrammatic drawings.

In the drawings:
Figure 1 shows a schematic view of an RFID tag, in accordance with the invention;
Figure 2 shows a schematic view of a system using the RFID tag of Figure 1; and
Figures 3 to 5 each show a schematic signal.

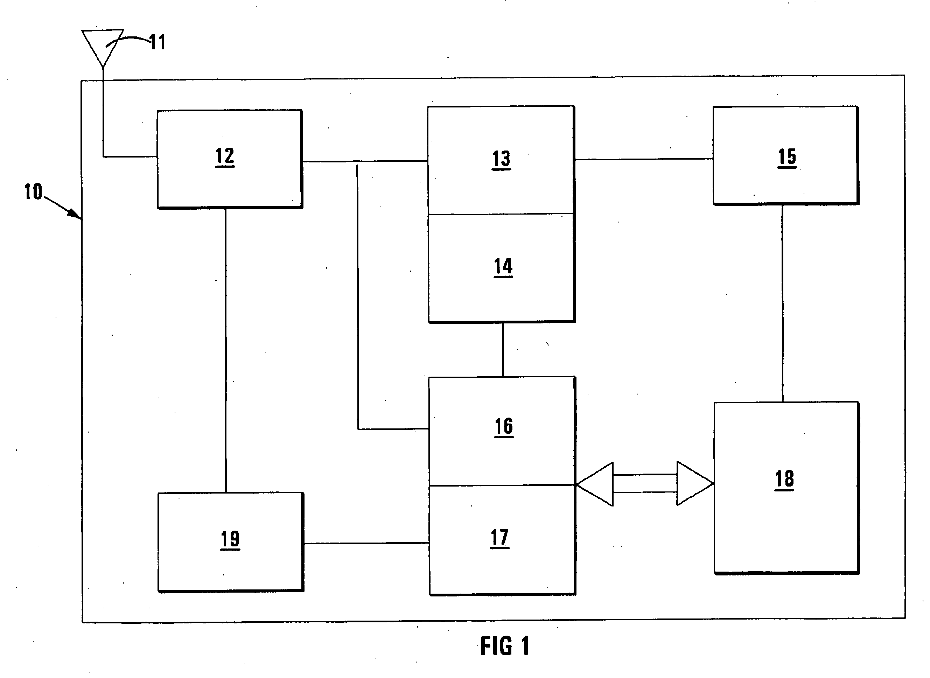

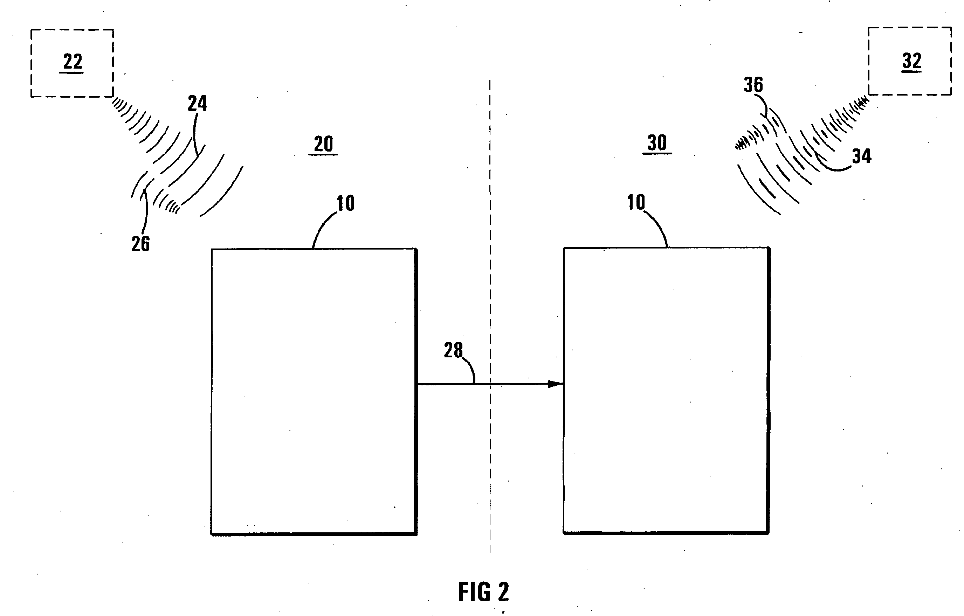

Referring to Figures 1 and 2 of the drawings, reference numeral 10 generally indicates an electronic tag, particularly an RFID tag, in accordance with the invention. As shown in Figure 1, the RFID tag 10 includes an antenna 11 and a rectifier and detector 12, in conventional fashion. The RFID tag 10 further includes detectors in the form of an RTF protocol detector, specifically an EPC preamble detector 13, and a TTF or TTO protocol detector, specifically an iP-X header detector 14. The RFID tag 10 further includes a persistent status flag 15, respective EPC and iP-X protocol engines 16, 17, a memory component in the form of an EEPROM 18, and a modulator 19. The EEPROM 18 has stored thereon a unique ID code associated with the RFID tag 10, and optionally additional data.

It is to be appreciated that components 13 to 18 in Figure 1, although shown conceptually separately, may, depending on the embodiment, be integral with one another.

Referring now also to Figure 2, in conventional fashion, a signal 24, 34 broadcast by a reader 22, 32 is received by the antenna 11, therefore acting as a receiver, and rectified by the rectifier and detector 12, to energise the RFID tag 10, the broadcast signal 24, 34 thereby acting as a power source.

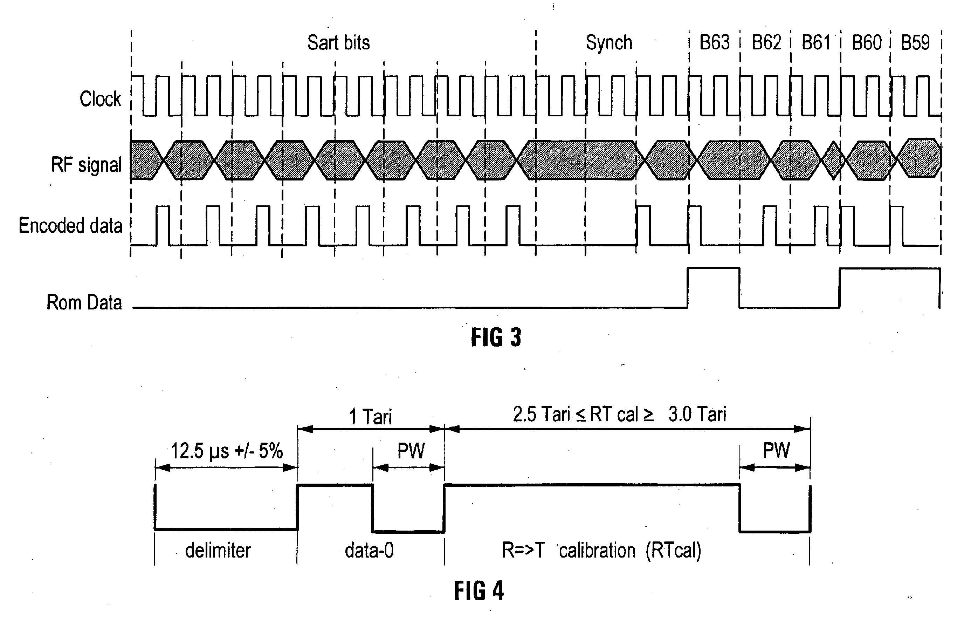

The rectifier and detector 12 also feeds data detected in the signal 24, 34 to the EPC preamble detector 13 and the iP-X header detector 14. Examples of formats of an EPC preamble and an iP-X header are shown in Figures 3 and 4 respectively.

When an EPC preamble (Figure 3) is detected by the EPC preamble detector 13, the EPC preamble detector 13 enables the EPC protocol engine 16, and if necessary, the EEPROM 18 is accessed and a signal 36 is modulated by the modulator 19 and transmitted back via the antenna 11. The antenna 11 therefore acts as a transmitter.

Similarly, when an iP-X header (Figure 4) is detected by the iP-X header detector 14, the iP-X header detector 14 enables the iP-X protocol engine 17, and if necessary, the EEPROM 18 is accessed and a signal 26 is modulated by the modulator 19 and transmitted back via the antenna 11.

In use, the RFID tag 10 is in a first zone, indicated by reference numeral 20, which includes a reader 22 operating in iP-X protocol mode (iP-X protocol being an example of a TTF or TTO protocol). iP-X protocol is widely used in China, and zone 20 could therefore be an area in China. Reader 22 broadcasts a signal 24 in iP-X protocol. The signal 24 is received via the antenna 11, the iP-X header detector 14 detects the use of iP-X protocol and enables the iP-X protocol engine 17.

The RFID tag 10 sets the persistent status flag 15 to iP-X protocol mode. The persistent status flag 15 is a short term memory component having a memory life of five seconds or less. Because the signal 24 powers the RFID tag 10, if the RFID tag 10 moves out of a path of the signal 24, the RFID tag 10 loses its power source. However, if the RFID tag 10 moves out of the path of the signal 24 for a short time (i.e. less than five seconds), the persistent status flag 1.5 retains its memory, and when the RFID tag 10 moves back into the path of the signal 24 and is re-powered, the persistent status flag 15 is read, and the RFID tag 10 resumes communication in iP-X protocol mode.

The RFID tag 10 is then moved, as represented by arrow 28, to a second zone 30. The second zone 30 includes a reader 32 operating in EPC protocol mode (EPC protocol being an example of an RTF protocol). EPC protocol is widely used in the USA, and zone 30 could therefore be an area in the USA. A practical example of the move 28 would be shipping of an article containing the RFID tag 10 from China to the USA.

The reader 32 in zone 30 transmits a signal 34 to the RFID tag 10. The signal 34 is received via the antenna 11 and the EPC preamble detector 13 detects that the received signal 26 is in EPC protocol, and enables the EPC protocol engine 16. Similarly, the persistent status flag 15 is set to EPC protocol mode.

Alternatively, as the RFID tag 10 left zone 20, the reader 22 could have transmitted an instruction, for example a WRITE instruction, to the RFID tag 10 to set a default status flag, as stored in the EEPROM 18, to EPC protocol mode, thereby manually switching the RFID tag 10 to EPC protocol mode. The EEPROM 18 is a long term memory component, therefore retaining the default status flag even when the RFID tag 10 is un-powered for extended periods of time. When the RFID tag 10 is manufactured, the default status flag is preferably set to a protocol in which the RFID tag 10 is likely to be first used. The default status flag dictates in which protocol mode the RFID tag 10 is to operate if a particular protocol mode cannot be detected or if the RFID tag 10 is configured not to detect automatically the protocol mode of a received signal 24, 34.

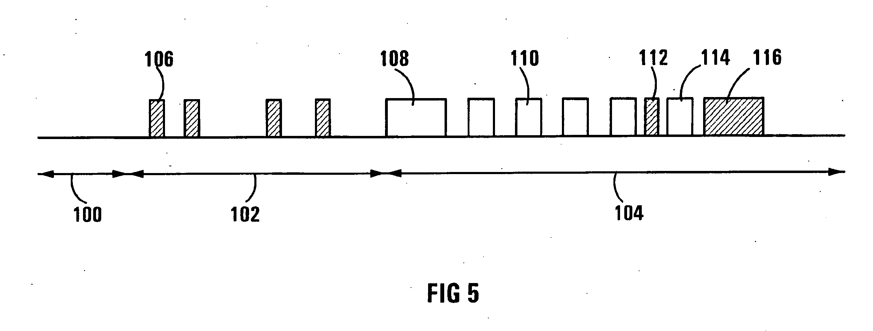

A typically transmit sequence of the RFID tag 10 is shown in Figure 5, the sequence including a boot portion 100, an iP-X portion 102, and an EPC portion 104. Upon entering the transmitted signal 24 of the reader 22, the RFID tag 10 powers-up and reads a state of the persistent status flag 15, for example, iP-X protocol mode, and the iP-X protocol engine 17 executes in iP-X protocol sequence 106. When the RFID tag 10 moves into zone 30, the RFID tag receives an EPC Query command 108 from the reader 32. The RFID tag 10 activates the EPC protocol engine 16 upon detection of the EPC Query command 108, interprets a QueryRep command 110 which follows EPC Query command 108 and replies with an RN16 command 111 at the appropriate time. When receiving an Ack command 114 from the reader 32, the RFID tag 10 replies with its EPC code 116.

The Inventor believes that the invention as illustrated provides an RFID tag which effectively communicates using different protocols, which is especially useful for RFID tags which are to be shipped or otherwise transported between areas using different protocols, for example China and the USA.

## Claims

1. An electronic tag which includes:
an RTF protocol engine and a TTF or TTO protocol engine, respectively to operate the tag in RTF protocol mode and in TTF or TTO protocol mode;
a switch operable to switch the tag between an RTF protocol mode and a TTF or TTO protocol mode;
a detector including an RTF protocol preamble detector and a TTF or TTO protocol header detector, respectively operable to detect automatically, in response to receipt respectively of a RTF protocol preamble or of a TTF or TTO protocol header, whether a reader or interrogator is broadcasting in an RTF protocol mode or a TTF or TTO protocol mode, the switch being operable to switch the tag automatically to the detected mode.

2. An electronic tag as claimed in claim 1, which is based on iP-X tag architecture and includes a memory component.

3. An electronic tag as claimed in claim 2, in which the memory component includes thereon a set of electronically readable instructions which are operable to detect whether the received signal uses an RTF protocol or a TTF or TTO protocol, and in response thereto to switch between protocol modes accordingly, the switch and the detector thus being software-based.

4. An electronic tag as claimed in any of the preceding claims, which includes dedicated circuitry operable to detect which protocol the received signal is using and in response thereto to switch the operation of the electronic tag between protocol modes, the switch and the detector thus being hardware-based.

5. A method of operating an electronic tag, the method including:
receiving a signal from a reader or interrogator;
detecting by means of the tag an RTF protocol preamble or a TTF or TTO protocol header in the signal, thereby to detect whether a reader or interrogator is operating in an RTF protocol mode or in a TTF or TTO protocol mode; and
switching the tag automatically to that mode.

6. An article having attached thereto an electronic tag as claimed in any of claims 1 to 4 inclusive.

7. A communication system which includes at least one electronic tag as claimed in any of claims 1 to 4 inclusive.

## Patentansprüche

1. Elektronisches Tag, umfassend:
eine RTF-Protokollmaschine und eine TTF- oder TTO-Protokollmaschine zum Betreiben des Tags im RTF-Protokollmodus bzw. im TTF- oder TTO Protokollmodus;
einen Schalter, der dazu dient, das Tag zwischen dem RTF-Protokollmodus und dem TTF- oder TTO-Protokollmodus umzuschalten;
einen Detektor mit einem RTF-Protokollpräambeldetektor und einem TTF- oder TTO-Protokollkopfdetektor, die jeweils dazu dienen, automatisch, in Reaktion auf den Empfang einer RTF-Protokolpräambel bzw. eines TTF- oder TTO-Protokollkopfes, zu erkennen, ob ein Leser oder ein Interrogator im RTF-Protokollmodus oder im TTF- oder TTO-Protokollmodus sendet, wobei der Schalter dazu dient, das Tag automatisch auf Erkennungsmodus zu schalten.

2. Elektronisches Tag nach Anspruch 1, welches auf iP-X Tag Architektur basiert und eine Speicherkomponente enthält.

3. Elektronisches Tag nach Anspruch 2, bei dem die Speicherkomponente einen Satz von elektronisch lesbaren Anweisungen enthält, die dazu dienen zu erkennen, ob das empfangene Signal ein RTF-Protokoll oder ein TTF- oder TTO-Protokoll verwendet, und in Reaktion darauf auf den entsprechenden Protokollmodus umzuschalten, wobei Schalter und Detektor softwarebasiert sind.

4. Elektronisches Tag nach einem der vorhergehenden Ansprüche mit einer dedizierten Schaltungsanordnung, die dazu dient zu erkennen, welches Protokoll das empfangene Signal benutzt und in Reaktion darauf den Betrieb des elektronischen Tags zwischen den Protokollmoden umzuschalten, wobei Schalter und Detektor hardwarebasiert sind.

5. Verfahren zum Betreiben eines elektronischen Tags, umfassend:
Empfangen eines Signals von einem Leser oder Interrogator;
Erkennen, mittels des Tags, einer RTF-Protokollpräambel oder eines TTF- oder TTO-Protokollkopfes im Signal, wodurch erkannt wird, ob ein Leser oder Interrogator im RTF-Protokollmodus oder im TTF- oder TTO-Protokollmuds betrieben wird; und
Schalten des Tags in den betreffenden Modus.

6. Artikel, an dem ein elektronisches Tag nach einem der Ansprüche 1 bis 4 befestigt ist.

7. Kommunikationssystem, umfassend mindestens ein elektronisches Tag nach einem der Ansprüche 1 bis 4.

## Revendications

1. Etiquette électronique qui comporte:
un moteur de protocole RTF et un moteur de protocole TTF ou TTO, pouvant faire fonctionner l'étiquette respectivement dans un mode de protocole RTF et dans un mode de protocole TTF ou TTO;
un commutateur pouvant fonctionner pour commuter l'étiquette entre un mode de protocole RTF et un mode de protocole TTF ou TTO;
un détecteur comportant un détecteur de préambule de protocole RTF et un détecteur d'en-tête de protocole TTF ou TTO, pouvant fonctionner respectivement pour détecter automatiquement, en réponse à la réception d'un préambule de protocole RTF ou d'un en-tête de protocole TTF ou TTO respectivement, si un lecteur ou un interrogateur diffuse en mode de protocole RTF ou en mode de protocole TTF ou TTO, le commutateur pouvant fonctionner pour commuter l'étiquette automatiquement au mode détecté.

2. Etiquette électronique telle que revendiquée dans la revendication 1, qui est fondée sur une architecture d'étiquette iP-X et qui comporte un composant de mémoire.

3. Etiquette électronique telle que revendiquée dans la revendication 2, dans laquelle sur le composant de mémoire se trouve un ensemble d'instructions électroniquement lisibles qui peuvent être mises en oeuvre pour détecter si le signal reçu utilise un protocole RTF ou un protocole TTF ou TTO, et en réponse à celui-ci, pour commuter entre modes de protocoles en conséquence, le commutateur et le détecteur étant ainsi à base logicielle.

4. Etiquette électronique telle que revendiquée dans l'une des revendications précédentes, qui comporte des circuits dédiés pouvant fonctionner pour détecter le protocole qu'utilise le signal reçu et en réponse à celui-ci pour commuter le fonctionnement de l'étiquette électronique entre modes de protocole, le commutateur et le détecteur étant ainsi à base matérielle.

5. Procédé d'exploitation d'une étiquette électronique, le procédé comportant le fait de :
recevoir un signal d'un lecteur ou d'un interrogateur;
détecter au moyen de l'étiquette un préambule de protocole RTF ou un en-tête de protocole TTF ou TTO dans le signal, pour détecter ainsi si un lecteur ou un interrogateur fonctionne en mode de protocole RTF ou en mode de protocole TTF ou TTO; et
commuter l'étiquette automatiquement à ce mode.

6. Article ayant une étiquette électronique qui lui est attachée telle que revendiquée dans l'une des revendications 1 à 4 comprises.

7. Système de communication qui comporte au moins une étiquette électronique telle que revendiquée dans l'une des revendications 1 à 4 comprises.
